# EUROPÄISCHE PATENTSCHRIFT

(11) **EP 4 599 995 B1**
(45) Veröffentlichungstag und Bekanntmachung des Hinweises auf die Patenterteilung: **25.02.2026**
(21) Anmeldenummer: 24221836.0
(22) Anmeldetag: 19.12.2024
(51) Int. Cl.: B25J 9/16, G05B 19/4061

(54) **VERFAHREN ZUM SICHEREN BETRIEB EINER MOBILEN MASCHINE**
METHOD FOR SECURELY OPERATING A MOBILE MACHINE
PROCÉDÉ DE FONCTIONNEMENT SÉCURISÉ D'UNE MACHINE MOBILE

(30) Priorität: 09.02.2024 DE 102024103644
(43) Veröffentlichungstag der Anmeldung: 13.08.2025
(73) Patentinhaber: SICK AG, 79183 Waldkirch (DE)
(72) Erfinder: ERLEWEIN, Patrick, 79279 Vörstetten (DE); FRANZ, Max, 79254 Oberried (DE)
(74) Vertreter: Manitz Finsterwald Patent- und Rechtsanwaltspartnerschaft mbB

(56) Entgegenhaltungen:
- DE-A1- 10 324 627
- DE-A1- 102010 046 327
- DE-A1- 102020 214 290
- DE-A1- 102021 119 372
- US-A1- 2023 219 237

## Beschreibung

Die Erfindung betrifft ein Verfahren zum sicheren Betrieb einer Maschine, insbesondere im Rahmen einer Mensch-Roboter-Interaktion, wobei die Maschine eine fahrbare Basis, einen an der fahrbaren Basis angeordneten beweglichen Maschinenteil mit einem Gefährdungsabschnitt sowie eine an dem beweglichen Maschinenteil angeordnete Sicherungsvorrichtung mit einem oder mehreren Sensoren umfasst.

Ein Verfahren nach dem Oberbegriff des Anspruchs 1 ist aus DE 10 2010 046 327 A1 bekannt. Weitere ähnliche Verfahren werden in DE 103 24 627 A1, DE 10 2021 119 372 A1 und DE 10 2020 214 290 A1 beschrieben.

Vor allem im industriellen Umfeld werden Roboter oder vergleichbare Maschinen dazu verwendet, bestimmte Aufgaben zu verrichten. Dies betrifft insbesondere Aufgaben, bei denen besonders große Kräfte ausgeübt werden müssen und/oder die mit hoher Geschwindigkeit und Präzision auszuführen sind, vor allem dann, wenn die jeweilige Aufgabe sehr oft auf dieselbe Weise durchzuführen ist. Es gibt aber auch Aufgaben, die sich von einem Menschen besser ausführen lassen als von einer Maschine. Dies betrifft insbesondere Aufgaben, die schwer zu automatisieren sind, etwa weil sie Erfahrung und/oder eine hohe Anpassungsfähigkeit voraussetzen. Bei Prozessen, die sowohl Arbeiten der einen Art als auch Arbeiten der anderen Art umfassen, kann es daher zweckmäßig sein, wenn Menschen und Maschinen zusammenarbeiten, um die jeweiligen Stärken möglichst effizient zu kombinieren.

Die Art der Zusammenarbeit kann dabei unterschiedlich ausfallen. Beispielsweise können sich die Arbeitsbereiche eines Roboters und eines Menschen lediglich überschneiden, wobei keine direkte Interaktion zwischen dem Roboter und dem Menschen stattfindet oder wobei eine Interaktion nur bei Stillstand des Roboters vorgesehen ist. Eine solche Form der Zusammenarbeit wird auch als Mensch-Roboter-Kooperation bezeichnet. Die Zusammenarbeit kann aber auch so weit gehen, dass eine direkte Interaktion bis hin zum planmäßigen Kontakt zwischen einem Menschen und einem Roboter erfolgt, etwa wenn der Mensch und der Roboter gleichzeitig an einem Werkstück arbeiten oder der Roboter handgeführt wird. Diese Art der Zusammenarbeit wird auch als Mensch-Roboter-Kollaboration bezeichnet. In Bezug auf die vorliegende Erfindung soll Mensch-Roboter-Interaktion in einem eher weiten Sinne zu verstehen sein und alle der genannten Formen der Zusammenarbeit, insbesondere sowohl Mensch-Roboter-Kollaboration als auch Mensch-Roboter-Kooperation, umfassen.

Durch eine Mensch-Roboter-Interaktion ergeben sich hohe Anforderungen hinsichtlich der Sicherheit der beteiligten Personen, da die beteiligten Maschinen insbesondere aufgrund ihrer Kraft und Geschwindigkeit eine Gefahr für die Personen darstellen können. Der genannte Gefährdungsabschnitt ist dabei ein Abschnitt des beweglichen Maschinenteils, von dem bzw. von dessen Struktur grundsätzlich eine besondere Gefährdung für einen mit der Maschine zusammenarbeitenden Menschen ausgeht. Grundsätzlich kann aber auch die Maschine als Ganzes eine Gefahr für Personen in ihrem Umfeld darstellen. Das gilt umso mehr, wenn es sich bei der Maschine nicht um eine stationäre Maschine, bei der im Wesentlichen nur der bewegliche Maschinenteil beweglich ist, sondern um eine mobile Maschine handelt, die dadurch, dass ihre Basis fahrbar ist, insgesamt ihre Position verändern kann.

Es müssen daher Vorkehrungen getroffen werden, um Schaden an Personen nach Möglichkeit auszuschließen. Derartige Vorkehrungen umfassen sowohl passive Maßnahmen, beispielsweise dass harte oder scharfe Kanten an Außenseiten der Maschine vermieden und eher weiche und/oder abgerundete Oberflächen vorgesehen werden, als auch aktive Sicherheitsmechanismen, die im Falle einer Gefahr für eine Person eine konkrete sicherheitsgerichtete Reaktion auslösen, um diese Gefahr abzuwenden. Nicht immer lassen sich passive Maßnahmen umfassend verwirklichen. Beispielsweise kann an einem freien Ende eines Roboterarms ein Werkzeug (zum Beispiel ein Greifer oder ein Dispenser) vorgesehen sein, das der Bearbeitung eines Werkstücks dient, wobei die Werkzeugspitze zur Erfüllung ihrer Funktion in einer Weise ausgebildet sein muss, die für eine mit der Maschine zusammenarbeitende Person gefährlich sein kann, etwa weil sie sich an dem Werkzeug verletzen kann. Um in einem solchen Fall dennoch eine Gefährdung möglichst auszuschließen, kann es als aktive Maßnahme etwa zweckmäßig sein, sicherzustellen, dass das Werkzeug stets nur mit einem gewissen Sicherheitsabstand zu anwesenden Personen betrieben werden kann.

Wenn im Rahmen einer Mensch-Roboter-Kollaboration Roboter oder vergleichbare Maschinen, wie etwa AGVs (Automated Guided Vehicle), AGCs (Automated Guided Container) oder Drohnen, in einer definierten Arbeitsumgebung mit Personen zusammenarbeiten, ohne dabei durch eine Trennvorrichtung dauerhaft räumlich voneinander getrennt zu sein, kann sich eine Gefahr für eine an der Kollaboration beteiligte Person insbesondere dadurch ergeben, dass es zu einer Kollision zwischen der Maschine und der Person kommt. Dieser Gefahr kann auf verschiedene Weisen begegnet werden.

Eine Möglichkeit besteht darin, dass die Maschine nur unter direkter Kontrolle eines Menschen betrieben wird, der somit selbst sicherstellen kann, dass weder er noch andere Personen durch die Maschine gefährdet werden. Erfolgt die Ansteuerung der Maschine hingegen automatisch oder arbeitet die Maschine sogar autonom, kann die Sicherheit der mit der Maschine zusammenarbeitenden Personen gemäß einem weiteren Sicherungskonzept dadurch gewährleistet werden, dass die Bewegungen der Maschine, insbesondere ihre Kraft und Geschwindigkeit, so limitiert werden, dass im Falle einer Kollision diese mit hoher Wahrscheinlichkeit für die jeweilige Person weder schmerzhaft ist noch zu Verletzungen führt. Ein solches auf einer Limitierung der Maschine beruhendes Sicherheitskonzept ist jedoch nur möglich, wenn die Arbeit, für die die Maschine eingesetzt wird, keine hohen Kräfte oder Geschwindigkeiten erfordert. Zudem kann es Abschnitte der Maschine geben, von denen auch bei geringen Kräften und Geschwindigkeiten eine Gefährdung ausgeht, etwa weil sie spitz, scharf oder heiß sind.

Gemäß einem alternativen Sicherungskonzept wird darauf abgezielt, dass es erst gar nicht zu einer Kollision zwischen einer Person und der Maschine kommt. Dazu wird sichergestellt, dass die Maschine überhaupt nur dann in Betrieb gesetzt werden kann, wenn sich kein Mensch in einer definierten Umgebung der Maschine oder zumindest eines jeweiligen Gefährdungsabschnitts der Maschine befindet, und unverzüglich abgebremst oder angehalten wird, sobald ein Mensch in die definierte Umgebung eindringt. Die Umgebung kann insbesondere durch einen Sicherheitsabstand zu der Maschine oder zu dem Gefährdungsabschnitt definiert sein und kann dabei statisch oder, wenn die Umgebung relativ zu einem sich bewegenden Element der Maschine definiert ist, auch dynamisch sein. Die jeweilige Umgebung wird dabei laufend überwacht, so dass auf die Anwesenheit eines Menschen in der Umgebung unverzüglich mit einer geeigneten Sicherungsmaßnahme reagiert werden kann.

Die für solche Sicherungskonzepte eingesetzte Technik muss besonders zuverlässig arbeiten und daher hohe Sicherheitsanforderungen erfüllen. Beispielsweise kann es sein, dass eine mobile Maschine die Norm EN ISO 3691-4:2020 für fahrerlose Flurförderfahrzeuge erfüllen muss. Des Weiteren kann es erforderlich sein, dass verwendete Sensoren die Normen EN ISO 13849-1:2015 und EN ISO 13849-2:2012 für Maschinensicherheit und die Gerätenormen EN IEC 61496-1: 2020 und EN IEC 61496-2:2020 für berührungslos wirkende Schutzeinrichtungen (BWS) erfüllen. Dazu sind eine Reihe von Maßnahmen zu treffen, wie etwa eine sichere elektronische Auswertung durch redundante, diversitäre Elektronik und eine Funktionsüberwachung oder Überwachung der Verschmutzung optischer Bauteile.

Beispielsweise kann an dem distalen (freien) Ende eines Roboterarms, der einen Endeffektor (beispielsweise ein Werkzeug oder eine Werkzeugaufnahme für ein Werkzeug) aufweist, von dem grundsätzlich eine Gefährdung für eine mit dem Roboterarm zusammenarbeitende Person ausgeht, eine Sicherungsvorrichtung vorgesehen werden, welche die von diesem Gefährdungsabschnitt des Roboterarms ausgehende Gefahr dadurch absichert, dass ein den Gefährdungsabschnitt umhüllendes Schutzvolumen überwacht wird. Das Schutzvolumen kann mittels mehrerer Sensoren realisiert werden, mit denen sich feststellen lässt, ob ein Objekt in das Schutzvolumen eingreift oder nicht. Wenn ein Eingreifen in das Schutzvolumen detektiert wird, kann darauf in sicherheitsgerichteter Weise reagiert werden, insbesondere indem die Bewegung des Roboterarms abgebremst oder gestoppt wird.

Derartige Sicherungsvorrichtungen sind dabei nicht nur für einen beweglichen Maschinenteil (z. B. Roboterarm) zweckmäßig, sondern können im Falle einer mobilen Maschine auch für die gesamte Maschine nützlich sein. Dazu kann entsprechend wie für den beweglichen Maschinenteil vorgesehen sein, dass zumindest ein Teil einer Umgebung der fahrbaren Basis der mobilen Maschine überwacht wird und im Falle eines Eingreifens in das so definierte Schutzvolumen in sicherheitsgerichteter Weise reagiert wird, insbesondere indem die Fahrbewegung der mobilen Maschine abgebremst oder gestoppt wird. Zur Überwachung der Umgebung der fahrbaren Basis sind dabei wiederum Sensoren erforderlich, die die Umgebung abtasten. Typischerweise sind dazu Sicherungsvorrichtungen mit einer Vielzahl von Sensoren an zumindest derjenigen Seite der fahrbaren Basis angeordnet, die der Richtung entspricht, in die die mobile Maschine vorwärts fahren kann. Beispielsweise können Sensoren in der Mitte dieser Seite und/oder an den beiden Enden dieser Seite (Ecken der fahrbaren Basis) vorgesehen sein, insbesondere um auch bei Kurvenfahrten im Wesentlichen den gesamten Bereich in Fahrtrichtung vor der fahrbaren Basis zuverlässig erfassen zu können. Bei mobilen Maschinen, die auch rückwärts fahren können, sind eine oder mehrere entsprechende Sicherungsvorrichtungen dann auch an der entgegengesetzten Seite der fahrbaren Basis vorgesehen.

Eine solche Vielzahl an Sicherungsvorrichtungen, die jeweils mehrere Sensoren umfassen können, wirkt sich jedoch negativ auf die Kosten der mobilen Maschine aus. Darüber hinaus nimmt mit jeder zusätzlichen Komponente auch das Gewicht der mobilen Maschine zu, die daher (insbesondere für das Fahren) stärkere Motoren benötigt, als es bei geringerem Gewicht der Fall wäre. Zudem steigt auch die Leistungsaufnahme der mobilen Maschine, da die Sicherungsvorrichtungen mit Energie versorgt werden müssen. Das führt dazu, dass leistungsfähigere Batterien vorgesehen werden müssen, die noch zusätzlich das Gewicht der mobilen Maschine erhöhen und außerdem länger benötigen, um aufgeladen zu werden, so dass sich das Verhältnis zwischen Arbeits- und Ladezeiten der mobilen Maschine verschlechtert. Schließlich wirkt sich jede zusätzliche Komponente auch negativ auf Kennzahlen der funktionalen Sicherheit, wie etwa den MTTF_{D}-Wert (Mean Time To Dangerous Failure), aus, da jede zusätzliche Verkabelung eine zusätzliche potentielle Fehlerquelle ist. Es ist eine Aufgabe der Erfindung, diese Nachteile zu vermeiden.

Die Aufgabe wird gelöst durch ein Verfahren zum sicheren Betrieb einer mobilen Maschine mit den Merkmalen des Anspruchs 1 sowie durch eine mobile Maschine mit den Merkmalen des Anspruchs 14.

Das erfindungsgemäße Verfahren eignet sich vorzugsweise im Rahmen einer Mensch-Roboter-Interaktion, insbesondere im Rahmen einer Mensch-Roboter-Kollaboration, und dient dem sicheren Betrieb einer mobilen Maschine, die eine fahrbare Basis, einen an der fahrbaren Basis angeordneten beweglichen Maschinenteil mit einem Gefährdungsabschnitt sowie eine an dem beweglichen Maschinenteil angeordnete Sicherungsvorrichtung mit einem oder mehreren Sensoren umfasst. Bei der mobilen Maschine kann es sich beispielsweise um einen mobilen Manipulator handeln.

Die fahrbare Basis kann beispielsweise zumindest ein Fahrgestell (Chassis) und einen Antrieb zur Erzeugung einer Fahrbewegung des Fahrgestells umfassen. Die Fahrbarkeit der Basis ist dabei nicht passiv zu verstehen; sie ist also nicht darauf beschränkt, dass die Basis gefahren werden kann, sondern kann auch umfassen, dass die Basis selbst (mittels des genannten Antriebs), insbesondere auch autonom, fahren kann. Beispielsweise kann die fahrbare Basis nach Art eines fahrerlosen Transportsystems ausgebildet sein.

Die fahrbare Basis kann beispielsweise Räder aufweisen, mit denen sie auf einem Untergrund (beispielsweise einem Boden oder Schienen) abrollen kann, oder nach Art eines Kettenfahrzeugs eine Kette oder ein Band aufweisen, mit der/dem sie auf dem Untergrund abwälzen kann. Die genannte Fahrbarkeit der Basis ist dabei nicht auf eine spezielle Fortbewegungsart eingeschränkt.

Der bewegliche Maschinenteil ist einerseits, vorzugsweise unmittelbar, an der fahrbaren Basis angeordnet und andererseits (relativ zu der fahrbaren Basis) beweglich. Beispielsweise kann der bewegliche Maschinenteil einen länglichen, insbesondere armartigen, Verlauf aufweisen, dessen eines Ende (proximales Ende) fest mit der fahrbaren Basis verbunden und somit relativ zu der fahrbaren Basis stationär ist und dessen anderes Ende (distales Ende) zumindest zwischen verschiedenen Positionen, vorzugweise zumindest weitgehend frei, beweglich ist.

Die Beweglichkeit ist dabei nicht als lediglich grundsätzliche Beweglichkeit in dem Sinne zu verstehen, dass der bewegliche Maschinenteil nur passiv, etwa durch einen Nutzer, bewegt (gebogen, verschwenkt oder auf sonstige Weise neu ausgerichtet) werden kann; sondern der bewegliche Maschinenteil ist dazu ausgebildet, sich angetrieben selbst zu bewegen. Die mobile Maschine kann hierfür einen oder mehrere entsprechende Antriebe umfassen, die Teil des beweglichen Maschinenteils oder der fahrbaren Basis sein können und dazu angesteuert werden können, den beweglichen Maschinenteils bewegen.

Der bewegliche Maschinenteil ist vorzugsweise als Manipulator, insbesondere als Manipulatorarm oder Roboterarm, ausgebildet. Insofern kann es sich bei der mobilen Maschine um einen mobilen Roboter handeln. An seinem freien (distalen) Ende kann der bewegliche Maschinenteil einen Greifer, ein Werkzeug, einen Werkzeughalter oder einen sonstigen Endeffektor aufweisen, so dass mittels des beweglichen Maschinenteils eine bestimmte Arbeit verrichtet werden kann. Der bewegliche Maschinenteil ist dabei nicht unbedingt auf eine einzelne bestimmte Arbeit beschränkt, sondern kann idealerweise flexibel für verschiedene Aufgaben eingesetzt werden. Das kann beispielsweise dadurch erreicht werden, dass der bewegliche Maschinenteil mehrere Werkzeuge und/oder einen Werkzeughalter zur Aufnahme verschiedener Werkzeuge umfasst.

Der bewegliche Maschinenteil weist einen Gefährdungsabschnitt auf. Der bewegliche Maschinenteil ist dabei nicht auf genau einen Gefährdungsabschnitt beschränkt, sondern kann auch mehrere (gleichartige oder verschiedenartige) Gefährdungsabschnitte aufweisen. Bei dem (zumindest einen) Gefährdungsabschnitt kann es sich grundsätzlich um einen beliebigen Abschnitt des beweglichen Maschinenteils handeln, für den sichergestellt werden soll, dass mit der mobilen Maschine zusammenarbeitende Personen vor ihm geschützt sind. Insofern kommt insbesondere ein solcher Abschnitt als Gefährdungsabschnitt in Betracht, von dem, etwa aufgrund seiner Struktur oder seiner Funktion, eine Gefährdung für jeweilige Personen ausgeht.

Beispielsweise kann der Gefährdungsabschnitt den genannten Endeffektor sowie gegebenenfalls daran angrenzende Bereiche des beweglichen Maschinenteils umfassen. Insbesondere wenn der bewegliche Maschinenteil länglich bzw. armartig ausgebildet ist, kann der Gefährdungsabschnitt an dem genannten (bezüglich der fahrbaren Basis distalen) freien Ende des beweglichen Maschinenteils angeordnet sein. Aufgrund der Beweglichkeit des beweglichen Maschinenteils ist auch der Gefährdungsabschnitt, insbesondere relativ zur fahrbaren Basis, beweglich.

Zur Sicherung des Umfelds des beweglichen Maschinenteils vor einer Gefährdung durch den Gefährdungsabschnitt ist die Sicherungsvorrichtung vorgesehen. Die Sicherungsvorrichtung umfasst einen oder mehrere Sensoren und ist, vorzugweise unmittelbar, an dem beweglichen Maschinenteil angeordnet. Insbesondere ist die Sicherungsvorrichtung vollständig an dem beweglichen Maschinenteil angeordnet, kann also als Teil des beweglichen Maschinenteils betrachtet werden. Insofern bewegt sich die Sicherungsvorrichtung mit dem beweglichen Maschinenteil mit, wenn dieser sich bewegt. Insbesondere umfasst die Sicherungsvorrichtung keinen Sensor, der nicht an dem beweglichen Maschinenteil angeordnet ist. Zweckmäßigerweise ist die Sicherungsvorrichtung mit ihren Sensoren in unmittelbarer Nachbarschaft zu dem Gefährdungsabschnitt angeordnet, um das Umfeld des Gefährdungsabschnitts möglichst umfassend überwachen zu können.

Bei den Sensoren der Sicherungsvorrichtung handelt es sich vorzugsweise um optoelektronische Sensoren, beispielsweise um Distanzsensoren, die nach dem Time-of-Flight-Prinzip basierend auf Laufzeitunterschieden zwischen ausgesandter und empfangener Strahlung Abstände messen. Alternativ dazu können die Sensoren der Sicherungsvorrichtung beispielsweise auch Radarsensoren sein. Grundsätzlich kommen alle Arten von Sensoren in Betracht, die es ermöglichen, das Eindringen eines Objekts in ein von den Sensoren überwachtes Schutzvolumen zu erfassen.

Das erfindungsgemäße Verfahren umfasst, dass die mobile Maschine wahlweise in einem Arbeitsmodus oder in einem Fahrmodus betrieben wird. Die mobile Maschine kann also grundsätzlich sowohl in dem einen als auch in dem anderen Modus betrieben werden, allerdings nicht gleichzeitig in beiden Modi. Die Entscheidungen darüber, wann die mobile Maschine in welchem Modus betrieben wird, können situationsabhängig von einem Menschen getroffen werden, können basierend auf einem festgelegten oder dynamischen Ablaufplan vorgegeben werden oder aber autonom erfolgen. Insbesondere können sich der Arbeitsmodus und der Fahrmodus situationsbedingt abwechseln. Die mobile Maschine wird insofern also abwechselnd in dem Arbeitsmodus und in dem Fahrmodus betrieben. Beispielsweise kann das Verfahren umfassen, dass die mobile Maschine in einem ersten Zeitraum im Arbeitsmodus und in einem zweiten, von dem ersten verschiedenen, Zeitraum im Fahrmodus betrieben wird, wobei der erste und der zweite Zeitraum vorzugsweise, jedoch nicht zwingend, zumindest im Wesentlichen unmittelbar aufeinanderfolgen. In einem dritten Zeitraum kann die mobile Maschine dann wieder in dem Arbeitsmodus betrieben werden usw.

Das erfindungsgemäße Verfahren umfasst ferner: dass in dem Arbeitsmodus die fahrbare Basis stillsteht, der bewegliche Maschinenteil Arbeitsbewegungen ausführt und die Sicherungsvorrichtung dabei derart mitbewegt wird, dass sie mittels des einen oder der mehreren Sensoren ein Schutzvolumen überwacht, das einer definierten Umgebung des Gefährdungsabschnitts entspricht, wobei im Falle eines (aufgrund der Überwachung detektierten) Eingreifens eines Objekts in das Schutzvolumen eine sicherheitsgerichtete Reaktion ausgelöst wird, die eine Anpassung der (aktuell ausgeführten) Arbeitsbewegung umfasst; und dass in dem Fahrmodus die fahrbare Basis Fahrbewegungen ausführt, der bewegliche Maschinenteil eine definierte Fahrstellung einnimmt und die Sicherungsvorrichtung dabei (infolge der Ausrichtung des beweglichen Maschinenteils in der definierten Fahrstellung) derart ausgerichtet ist, dass sie mittels des einen oder der mehreren Sensoren ein Schutzvolumen überwacht, das einer definierten Umgebung der fahrbaren Basis entspricht, wobei im Falle eines (aufgrund der Überwachung detektierten) Eingreifens eines Objekts in das Schutzvolumen eine sicherheitsgerichtete Reaktion ausgelöst wird, die eine Anpassung der (aktuell ausgeführten) Fahrbewegung umfasst.

Der Arbeitsmodus und der Fahrmodus unterscheiden sich insbesondere dadurch, welcher Teil der mobilen Maschine sich jeweils bewegt: Im Arbeitsmodus führt der bewegliche Maschinenteil Arbeitsbewegungen aus, während die fahrbare Basis stillsteht (nicht fährt); im Fahrmodus hingegen führt die fahrbare Basis Fahrbewegungen aus (fährt), während sich der bewegliche Maschinenteil zwar zwangsläufig mit der fahrbaren Basis mitbewegt, da er an ihr angeordnet ist, relativ zur fahrbaren Basis jedoch eine definierte Fahrstellung einnimmt. Dabei können auch mehrere verschiedene Fahrstellungen definiert sein, von denen der bewegliche Maschinenteil im Fahrmodus eine jeweilige einnimmt, insbesondere in Abhängigkeit von der jeweiligen Fahrbewegung der fahrbaren Basis, wie weiter unten noch erläutert wird. Vorzugsweise ändert sich die Fahrstellung jedoch nicht, solange sich die Fahrbewegung nicht (d. h. insbesondere zumindest weder hinsichtlich ihrer Geschwindigkeit noch hinsichtlich ihrer Richtung) ändert. Im Fahrmodus führt der bewegliche Maschinenteil also nicht nur keine Arbeitsbewegungen aus, sondern steht (relativ zur fahrbaren Basis) zumindest im Wesentlichen still.

Die genannten Arbeitsbewegungen des beweglichen Maschinenteils erfolgen relativ zur stillstehenden fahrbaren Basis, während die genannten Fahrbewegungen der fahrbaren Basis relativ zur Umgebung der mobilen Maschine, beispielsweise relativ zu einer Werkhalle, in der die mobile Maschine betrieben wird, erfolgen. Die Arbeitsbewegungen sind im Plural genannt, da der bewegliche Maschinenteil mehrere verschiedene Arbeitsbewegungen, beispielsweise eine oder mehrere Abfolgen jeweils mehrerer einzelner Arbeitsbewegungen, ausführen kann. Zu einem bestimmten Zeitpunkt führt der bewegliche Maschinenteil dabei jedoch jeweils nur eine einzelne der insgesamt ausgeführten Arbeitsbewegungen aus. Wenn von einer Arbeitsbewegung im Singular die Rede ist, ist damit daher die zu einem jeweiligen Zeitpunkt aktuell ausgeführte Arbeitsbewegung des beweglichen Maschinenteils gemeint. In entsprechender Weise kann die mobile Basis mehrere verschiedene Fahrbewegungen ausführen, von denen sie zu einem jeweiligen Zeitpunkt eine jeweilige ausführt. Wenn von einer Fahrbewegung im Singular die Rede ist, ist damit daher die zu einem jeweiligen Zeitpunkt aktuell ausgeführte Fahrbewegung der fahrbaren Basis gemeint.

Die jeweilige Fahrbewegung kann insbesondere durch ihre Geschwindigkeit (Fahrgeschwindigkeit) sowie, sofern die fahrbare Basis in verschiedene Richtungen (beispielsweise vorwärts und rückwärts und gegebenenfalls Kurven) fahren kann, zusätzlich durch ihre Richtung (Fahrtrichtung) definiert sein. Insbesondere kann eine jeweilige Fahrbewegung durch ihre Geschwindigkeit und ihre Richtung vollständig bestimmt sein.

Sowohl im Arbeitsmodus als auch im Fahrmodus überwacht jeweils dieselbe Sicherungsvorrichtung mittels ihrer Sensoren ein jeweiliges Schutzvolumen, wobei das Schutzvolumen im Arbeitsmodus einer definierten Umgebung des Gefährdungsabschnitts entspricht und im Fahrmodus einer definierten Umgebung der fahrbaren Basis entspricht. Insbesondere werden also dieselben Sensoren sowohl im Arbeitsmodus als auch im Fahrmodus für die Überwachung des jeweiligen Schutzvolumens verwendet. Zur Unterscheidung des im Arbeitsmodus überwachten Schutzvolumens und des im Fahrmodus überwachten Schutzvolumens voneinander könnten diese Schutzvolumina auch als erstes Schutzvolumen bzw. zweites Schutzvolumen oder auch als Arbeitsschutzvolumen bzw. Fahrschutzvolumen bezeichnet werden.

Das Überwachen erfolgt speziell im Hinblick auf Eingriffe in das jeweilige Schutzvolumen. Im Rahmen der Überwachung wird also detektiert, ob ein Objekt (z. B. ein Körperteil einer mit der mobilen Maschine interagierenden/kollaborierenden Person) in das jeweilige Schutzvolumen eingreift, dessen Eingreifen nicht vorgesehen ist. Das Eingreifen ist dabei relativ zu verstehen; es spielt also keine Rolle, ob sich dabei das Objekt oder das Schutzvolumen bewegt. Dabei können verschiedene Schwellenwerte definiert sein, die verschiedenen Graden des Eingreifens entsprechen, so dass je nach Grad in unterschiedlicher Weise reagiert werden kann.

Das Überwachen kann das Erfassen von (Abstands-) Daten mittels der Sensoren innerhalb eines Erfassungsbereichs des jeweiligen Sensors sowie das Auswerten dieser Daten im Hinblick darauf umfassen, ob ein Eingriff in das Schutzvolumen vorliegt. Dazu können die Daten beispielsweise mit einem Schwellenwert (einem von gegebenenfalls mehreren Schwellenwerten) verglichen werden. Das Auswerten kann in der Sicherungsvorrichtung oder außerhalb der Sicherungsvorrichtung, beispielsweise in einer Steuerungsvorrichtung für den beweglichen Maschinenteil oder für die fahrbare Basis, erfolgen, wie weiter unten konkreter beschrieben wird.

Für das Überwachen müssen nicht unbedingt im gesamten jeweiligen Schutzvolumen Daten (Abstände) erfasst werden. Denn es kann reichen, wenn die Sensoren die Ränder des Schutzvolumens erfassen, die von einem in das Schutzvolumen eingreifenden Objekt durchdrungen werden (müssen).

Da das Schutzvolumen im Arbeitsmodus relativ zum Gefährdungsabschnitt und im Fahrmodus relativ zur fahrbaren Basis angeordnet ist, ist es räumlich nicht stationär, sondern bewegt sich während der Arbeitsbewegungen mit dem Gefährdungsabschnitt und während der Fahrbewegungen mit der fahrbaren Basis mit. Das wird dadurch erreicht, dass die Sicherungsvorrichtung an dem beweglichen Maschinenteil angeordnet ist und sich daher im Arbeitsmodus bei Arbeitsbewegungen des beweglichen Maschinenteils mit dem beweglichen Maschinenteil mitbewegt (insbesondere bewegen sich dabei auch alle Sensoren der Sicherungsvorrichtung mit dem beweglichen Maschinenteil, vorzugweise speziell mit dem Gefährdungsabschnitt des beweglichen Maschinenteils, mit); im Fahrmodus nimmt der bewegliche Maschinenteil die genannte Fahrstellung ein, wodurch sich die Sicherungsvorrichtung in einer der Fahrstellung entsprechenden Anordnung relativ zur fahrbaren Basis mit der fahrbaren Basis mitbewegt. Auf diese Weise kann das Schutzvolumen im Arbeitsmodus relativ zum Gefährdungsabschnitt (nämlich als definierte Umgebung des Gefährdungsabschnitts) und im Fahrmodus relativ zur fahrbaren Basis (nämlich als definierte Umgebung der fahrbaren Basis) definiert sein.

Die genannte Umgebung des Gefährdungsabschnitts und die genannte Umgebung der fahrbaren Basis können insbesondere hinsichtlich ihrer jeweiligen Maße definiert sein, vorzugweise hinsichtlich ihrer jeweiligen richtungsabhängigen Erstreckung weg von dem Gefährdungsabschnitt bzw. der fahrbaren Basis. Dazu ist es zweckmäßig, wenn die Sensoren der Sicherungsvorrichtung benachbart zum Gefährdungsabschnitt angeordnet sind und im Fahrmodus in der Fahrstellung des beweglichen Maschinenteils vergleichsweise nah an (einer von der überwachten Umgebung umfassten Seite) der fahrbaren Basis angeordnet sind. Grundsätzlich ist es zweckmäßig, dass die Umgebung des Gefährdungsabschnitts, die im Arbeitsmodus überwacht wird, unmittelbar an den Gefährdungsabschnitt angrenzt bzw. die Umgebung der fahrbaren Basis, die im Fahrmodus überwacht wird, unmittelbar an die fahrbare Basis angrenzt.

Die richtungsabhängige Erstreckung der jeweiligen Umgebung kann beispielsweise durch (für die verschiedenen Sensoren verschiedene) Abstandsschwellenwerte für von den Sensoren erfasste Abstände bestimmt werden, wobei sich die im Fahrmodus maßgeblichen Abstandsschwellenwerte von den im Arbeitsmodus maßgeblichen Abstandsschwellenwerten unterscheiden.

Die im Arbeitsmodus überwachte Umgebung des Gefährdungsabschnitts und die im Fahrmodus überwachte Umgebung der fahrbaren Basis können zudem jeweils dynamisch sein, d. h. dass ihre jeweiligen Maße situationsabhängig sein können. Beispielsweise kann die im Arbeitsmodus überwachte Umgebung des Gefährdungsabschnitts, etwa für eine Annäherung an ein zu bearbeitendes Werkstück, vorübergehend verkleinert werden und/oder die im Fahrmodus überwachte Umgebung der fahrbaren Basis von der Geschwindigkeit der jeweiligen Fahrbewegung abhängen.

Sowohl im Arbeitsmodus als auch im Fahrmodus wird im Falle eines Eingreifens eines Objekts in das jeweilige Schutzvolumen eine jeweilige sicherheitsgerichtete Reaktion ausgelöst. Die sicherheitsgerichtete Reaktion, die im Arbeitsmodus gegebenenfalls ausgelöst wird und eine Anpassung der (aktuell ausgeführten) Arbeitsbewegung umfasst, kann auch als arbeitssicherheitsgerichtete Reaktion bezeichnet werden; die sicherheitsgerichtete Reaktion die im Fahrmodus gegebenenfalls ausgelöst wird und eine Anpassung der (aktuell ausgeführten) Fahrbewegung umfasst, kann auch als fahrsicherheitsgerichtete Reaktion bezeichnet werden. Als Eingreifen in das Schutzvolumen kann beispielsweise gewertet werden, wenn mindestens einer der Sensoren der Sicherungsvorrichtung einen Abstandswert misst, der einen dem aktuell maßgeblichen Schutzvolumen entsprechenden Abstandsschwellenwert unterschreitet.

Als sicherheitsgerichtete Reaktion auf ein erfasstes Eingreifen wird die jeweilige aktuell ausgeführte Bewegung (Arbeitsbewegung des beweglichen Maschinenteils bzw. Fahrbewegung der fahrbaren Basis) angepasst. Die Anpassung kann insbesondere eine Änderung der jeweiligen Bewegung (insbesondere hinsichtlich ihrer Richtung und/oder Geschwindigkeit) umfassen, die idealerweise zu einer Reduzierung der Gefährdung des Umfeldes der mobilen Maschine durch den Gefährdungsabschnitt bzw. durch die mobile Maschine als Ganzes führt. Beispielsweise kann die Anpassung umfassen, dass im Arbeitsmodus der bewegliche Maschinenteil bzw. im Fahrmodus die fahrbare Basis dem jeweiligen Objekt ausweicht und/ oder abgebremst wird oder aber vollständig angehalten wird.

Ein besonderer Vorteil der vorliegenden Erfindung ergibt sich daraus, dass dieselben Sensoren derselben Sicherungsvorrichtung, die im Arbeitsmodus dazu genutzt werden, als Sicherungsvolumen die Umgebung des Gefährdungsabschnitts zu überwachen, im Fahrmodus dazu genutzt werden, als Sicherungsvolumen die Umgebung der fahrbaren Basis zu überwachen. Erfindungsgemäß ist dabei auch vorgesehen, dass die mobile Maschine im Fahrmodus die genannte Umgebung der fahrbaren Basis ausschließlich mittels (der Sensoren) der an dem beweglichen Maschinenteil angeordneten Sicherungsvorrichtung überwacht. Dadurch ist es möglich, auf zu der genannten Sicherungsvorrichtung zusätzliche, an der fahrbaren Basis angeordnete Sicherungsvorrichtungen zu verzichten. Die mobile Maschine kann daher vorteilhafterweise weniger Komponenten, ein geringeres Gewicht sowie eine reduzierte Leistungsaufnahme aufweisen. Dadurch kann die mobile Maschine kostengünstiger sein und zudem eine verbesserte funktionale Sicherheit aufweisen.

Gemäß einer vorteilhaften Ausführungsform erstreckt sich die Sicherungsvorrichtung um den Gefährdungsabschnitt herum. Beispielsweise können die Sensoren (insbesondere alle Sensoren) der Sicherungsvorrichtung um den Gefährdungsabschnitt herum, etwa ringförmig, verteilt angeordnet sein. Dadurch kann die im Arbeitsmodus überwachte Umgebung des Gefährdungsabschnitts den Gefährdungsabschnitt in entsprechender Weise umgeben bzw. umhüllen. Idealerweise weist die überwachte Umgebung dabei entlang ihres Umfangs um den Gefährdungsabschnitt herum keine Unterbrechungen auf. Schmale Lücken können aber akzeptabel sein, insbesondere sofern sie kleiner als die zu schützenden Objekte sind.

Gemäß einer weiteren vorteilhaften Ausführungsform erstreckt sich die genannte Umgebung des Gefährdungsabschnitts, die im Arbeitsmodus überwacht wird, in zumindest einer Raumebene derart um den Gefährdungsabschnitt herum, dass der Gefährdungsabschnitt zumindest in zu der Raumebene parallelen Richtungen nur durch diese Umgebung hindurch von außen zugänglich ist. Idealerweise erstreckt sich die überwachte Umgebung derart um den Gefährdungsabschnitt herum, dass der Gefährdungsabschnitt aus allen Raumrichtungen nur durch die Umgebung hindurch von außen zugänglich ist. Da dies je nach Anordnung der Sensoren schwierig oder unmöglich sein kann, ist es zweckmäßig, zumindest eine Vielzahl von Raumrichtungen abzudecken, insbesondere eine Annäherung an den Gefährdungsabschnitt in horizontalen Richtungen. Auf dieser Weise kann zumindest weitgehend ausgeschlossen werden, dass ein Objekt in Kontakt mit dem Gefährdungsabschnitt gelangt, ohne von der Sicherungsvorrichtung detektiert zu werden.

Grundsätzlich kann es zweckmäßig sein, wenn es sich bei den Sensoren der Sicherungsvorrichtung um berührungslose Distanzsensoren handelt, die dazu ausgebildet sind, in einer jeweiligen Erfassungsrichtung (d. h. der Erfassungsrichtung des jeweiligen Sensors) den Abstand eines jeweiligen Objekts von dem jeweiligen Sensor zu erfassen (sofern sich denn ein Objekt innerhalb der Reichweite des jeweiligen Sensors in dessen Erfassungsrichtung befindet). Die Sensoren können beispielsweise als Time-of-Flight- oder Radar-Sensoren ausgebildet sein. Derartige Sensoren können vergleichsweise einfach auf an sich bekannte Weise dazu genutzt werden, die Ränder eines Schutzvolumens auf ein Eingreifen in das Schutzvolumen hin zu überwachen.

Gemäß einer vorteilhaften Ausführungsform wird die Erstreckung des Schutzvolumens entlang einer jeweiligen Erfassungsrichtung (d. h. der Erfassungsrichtung eines jeweiligen Sensors der Sicherungsvorrichtung) durch einen jeweiligen Schwellenwert definiert, wobei für zumindest einige der Sensoren, insbesondere alle Sensoren, der Sicherungsvorrichtung der jeweilige Schwellenwert im Fahrmodus anders, insbesondere größer, ist als im Arbeitsmodus ist. Auf diese Weise kann sich das Schutzvolumen im Arbeitsmodus auf eine vergleichsweise kleine unmittelbare Umgebung des Gefährdungsabschnitts beschränken, während sich das Schutzvolumen im Fahrmodus von der Sicherungsvorrichtung aus über einen vergleichsweise großen Bereich, beispielsweise bis zu einem Boden, auf dem die fahrbare Basis fährt, erstrecken kann.

Gemäß einer weiteren vorteilhaften Ausführungsform weist die fahrbare Basis eine Oberfläche auf, wobei im Fahrmodus diejenigen Sensoren, deren Erfassungsrichtung die Oberfläche der fahrbaren Basis kreuzt, deaktiviert werden. Bei der Oberfläche kann es sich insbesondere um eine Arbeitsfläche handeln, die zumindest im Wesentlichen horizontal und/oder zumindest im Wesentlichen vertikal nach oben weisend ausgerichtet. Die Arbeitsfläche kann beispielsweise dazu dienen, dass ein oder mehrere Werkstücke für einen Transport oder für eine Bearbeitung durch einen an dem beweglichen Maschinenteil vorgesehenen Endeffektor auf ihr (unmittelbar oder gegebenenfalls über eine an der Arbeitsfläche vorgesehene Halterung) gelagert werden können. Vorzugsweise ist der bewegliche Maschinenteil an derjenigen Seite der fahrbaren Basis mit dieser verbunden, an der auch die Arbeitsfläche vorgesehen ist.

Je nach Ausrichtung der Sicherungsvorrichtung in der Fahrstellung kann es sein, dass sich ein Teil der fahrbaren Basis in den Erfassungsbereich eines oder mehrerer der Sensoren der Sicherungsvorrichtung erstreckt. Da diese Erfassungsbereiche für einen sicheren Betrieb der mobilen Maschine im Fahrmodus in der Regel nicht relevant sind und um zu vermeiden, dass die fahrbare Basis als ein in das Schutzvolumen eingreifendes Objekt gewertet und infolgedessen die sicherheitsgerichtete Reaktion ausgelöst wird, ist es zweckmäßig, die entsprechenden Sensoren zu deaktivieren.

Gemäß einer weiteren vorteilhaften Ausführungsform erstreckt sich die genannte Umgebung der fahrbaren Basis, die im Fahrmodus überwacht wird, zumindest in Richtung der jeweiligen (aktuell ausgeführten) Fahrbewegung über die fahrbare Basis hinaus. Das im Fahrmodus überwachte Schutzvolumen befindet sich dadurch (zumindest unter anderem) in Fahrtrichtung vor der fahrbaren Basis. Auf diese Weise können speziell solche Gefährdungen vermieden werden, die sich daraus ergeben, dass die mobile Maschine auf ein Objekt zufährt. Vorzugweise grenzt die überwachte Umgebung dabei zumindest in die jeweilige Fahrtrichtung unmittelbar an die fahrbare Basis an. Außerdem erstreckt sich die überwachte Umgebung vorzugsweise zumindest über die gesamte in die jeweilige Fahrtrichtung ausgerichtete Seite der fahrbaren Basis.

Gemäß einer weiteren vorteilhaften Ausführungsform ist die Fahrstellung, die der bewegliche Maschinenteil im Fahrmodus einnimmt, von der Geschwindigkeit und/ oder von der Richtung der jeweiligen (aktuell ausgeführten) Fahrbewegung abhängig. Dadurch kann die Ausrichtung des mittels der Sensorvorrichtung überwachten Schutzvolumens für eine zuverlässige Sicherung der mobilen Maschine in geeigneter Weise an die jeweilige Fahrbewegung angepasst sein. Vorteilhafterweise ist dabei für die Anpassung des Schutzvolumens an eine Änderung der Fahrbewegung keine zusätzliche Aktorik erforderlich, da sie durch eine Bewegung des ohnehin beweglichen Maschinenteils erfolgen kann, nämlich durch einen Wechsel der Fahrstellung des beweglichen Maschinenteils, durch den auch die Sensorvorrichtung ihre Ausrichtung ändert. Solange sich hingegen die Fahrbewegung nicht ändert, ändert sich vorzugsweise auch die Fahrstellung des beweglichen Maschinenteils nicht, so dass das Schutzvolumen (relativ zur fahrbaren Basis) konstant bleibt.

Insbesondere kann vorgesehen sein, dass der bewegliche Maschinenteil im Fahrmodus bei einer Fahrbewegung der fahrbaren Basis in eine erste Richtung eine erste Fahrstellung einnimmt, in der die Sicherungsvorrichtung derart ausgerichtet ist, dass das überwachte Schutzvolumen einer ersten Umgebung der fahrbaren Basis entspricht, die sich in die erste Richtung über die fahrbare Basis hinaus erstreckt, und bei einer Fahrbewegung der fahrbaren Basis in eine von der ersten Richtung verschiedene, insbesondere der ersten Richtung entgegengesetzte, zweite Richtung eine zweite Fahrstellung einnimmt, in der die Sicherungsvorrichtung derart ausgerichtet ist, dass das überwachte Schutzvolumen einer zweiten Umgebung der fahrbaren Basis entspricht, die sich in die zweite Richtung über die fahrbare Basis hinaus erstreckt. Auf diese Weise kann die Sicherungsvorrichtung stets sozusagen in die jeweilige Fahrtrichtung blicken und dadurch stets denjenigen Bereich überwachen, auf den die mobile Maschine zufährt.

Alternativ oder zusätzlich kann ferner vorgesehen sein, dass der bewegliche Maschinenteil im Fahrmodus bei einer Fahrbewegung der fahrbaren Basis mit einer ersten Geschwindigkeit eine erste Fahrstellung einnimmt, in der die Sicherungsvorrichtung derart ausgerichtet ist, dass das überwachte Schutzvolumen einer ersten Umgebung der fahrbaren Basis entspricht, die sich in Richtung der Fahrbewegung über die fahrbare Basis hinaus erstreckt, und bei einer Fahrbewegung der fahrbaren Basis mit einer zweiten Geschwindigkeit, die größer als die erste Geschwindigkeit ist, eine zweite Fahrstellung einnimmt, in der die Sicherungsvorrichtung derart ausgerichtet ist, dass das überwachte Schutzvolumen einer zweiten Umgebung der fahrbaren Basis entspricht, die sich weiter als die erste Umgebung in Richtung der (jeweiligen) Fahrbewegung über die fahrbare Basis hinaus erstreckt. Die jeweilige überwachte Umgebung erstreckt sich daher bei der zweiten, größeren Geschwindigkeit weiter in die Fahrtrichtung als bei der ersten Geschwindigkeit, so dass bei größerer Fahrgeschwindigkeit der mobilen Maschine Objekte vorteilhafterweise schon aus größerer Entfernung detektiert werden können. Die Fahrbewegung mit der ersten Geschwindigkeit und die Fahrbewegung mit der zweiten Geschwindigkeit können insbesondere dieselbe Richtung aufweisen.

Die beschriebene Vergrößerung der überwachten Umgebung bei größerer Geschwindigkeit kann insbesondere dadurch erreicht werden, dass die Sicherungsvorrichtung in der zweiten Fahrstellung im Vergleich zu der ersten Fahrstellung nach oben versetzt, in die Fahrtrichtung nach vorne versetzt und/oder um eine horizontale Achse nach oben verkippt ist.

Um den beweglichen Maschinenteil und die fahrbare Basis dazu anzusteuern, Arbeitsbewegungen bzw. Fahrbewegungen auszuführen, können entsprechende Steuerungseinheiten vorgesehen sein. Insbesondere kann die mobile Maschine eine Fahrsteuerungseinheit zur Steuerung der fahrbaren Basis sowie eine Arbeitssteuerungseinheit zur Steuerung des beweglichen Maschinenteils umfassen.

Gemäß einer vorteilhaften Ausführungsform wertet die Sicherungsvorrichtung von den Sensoren erfasste Daten im Hinblick auf ein Eingreifen in das jeweilige Schutzvolumen aus und gibt im Falle eines Eingreifens ein entsprechendes Signal (d. h. ein Signal, das einem Eingreifen in das jeweilige Schutzvolumen entspricht) an die jeweilige Steuerungseinheit (nämlich im Arbeitsmodus zumindest an die Arbeitssteuerungseinheit und im Fahrmodus zumindest an die Fahrsteuerungseinheit) aus, wobei die jeweilige Steuerungseinheit, wenn sie das entsprechende Signal empfängt, die jeweilige sicherheitsgerichtete Reaktion auslöst. Die Daten können dabei insbesondere fortlaufend von den Sensoren erfasst werden und ebenso fortlaufend von der Sicherungsvorrichtung ausgewertet werden. Wenn die Arbeitssteuerungseinheit im Arbeitsmodus das einem Eingreifen in das Schutzvolumen entsprechende Signal empfängt, löst sie die (arbeits)sicherheitsgerichtete Reaktion aus, die eine Anpassung der (aktuell ausgeführten) Arbeitsbewegung umfasst. Wenn die Fahrsteuerungseinheit im Fahrmodus das einem Eingreifen in das Schutzvolumen entsprechende Signal empfängt, löst sie die (fahr)sicherheitsgerichtete Reaktion aus, die eine Anpassung der (aktuell ausgeführten) Fahrbewegung umfasst.

Bei einer grundsätzlich ähnlichen, jedoch alternativen Ausführungsform gibt die Sicherungsvorrichtung von den Sensoren erfasste Daten an die Arbeitssteuerungseinheit und/oder an die Fahrsteuerungseinheit aus, wobei die Fahrsteuerungseinheit und/oder die Arbeitssteuerungseinheit, sofern die jeweilige Steuerungseinheit die Daten von der Sicherungsvorrichtung empfangen hat, diese Daten im Hinblick auf ein Eingreifen in das jeweilige Schutzvolumen auswertet/auswerten und im Falle eines Eingreifens die jeweilige sicherheitsgerichtete Reaktion auslöst/auslösen. Eine solche Ausführungsform unterscheidet sich von der vorstehenden Ausführungsform im Wesentlichen dadurch, dass die Sicherungsvorrichtung die erfassten Daten nicht auswertet, sondern direkt an zumindest eine der Steuerungseinheiten ausgibt. Die Auswertung erfolgt dann also erst in der jeweiligen Steuerungseinheit. Dabei sind unterschiedliche Möglichkeiten denkbar, in welchem Modus welche Steuerungseinheit die Daten empfängt und auswertet.

Beispielsweise kann vorgesehen sein, dass die Sicherungsvorrichtung die von den Sensoren erfassten Daten im Arbeitsmodus nur an die Arbeitssteuerungseinheit ausgibt und im Fahrmodus nur an die Fahrsteuerungseinheit ausgibt, wobei die jeweilige Steuerungseinheit die Daten dann im Hinblick auf ein Eingreifen in das jeweilige Schutzvolumen auswertet und im Falle eines Eingreifens die jeweilige sicherheitsgerichtete Reaktion auslöst (d. h. die Arbeitsbewegungen bzw. die Fahrbewegungen anpasst und den beweglichen Maschinenteil bzw. die fahrbare Basis entsprechend ansteuert).

Alternativ kann vorgesehen sein, dass die Sicherungsvorrichtung die von den Sensoren erfassten Daten in beiden Modi jeweils nur an eine der beiden Steuerungseinheiten ausgibt, die die empfangenen Daten dann im Hinblick auf ein Eingreifen in das jeweilige (dem aktuellen Modus entsprechende) Schutzvolumen auswertet und im Falle eines Eingreifens in das jeweilige Schutzvolumen je nachdem, in welchem Modus die mobile Maschine gerade betrieben wird, entweder selber die jeweilige sicherheitsgerichtete Reaktion auslöst oder ein dem Eingreifen in das Schutzvolumen entsprechendes Signal an die andere Steuerungseinheit ausgibt, die dann die jeweilige sicherheitsgerichtete Reaktion auslöst.

Des Weiteren ist auch denkbar, dass die Sicherungsvorrichtung die von den Sensoren erfassten Daten in beiden Modi an beide Steuerungseinheiten ausgibt, wobei im Arbeitsmodus die Arbeitssteuerungseinheit und im Fahrmodus die Fahrsteuerungseinheit die empfangenen Daten im Hinblick auf ein Eingreifen in das jeweilige Schutzvolumen auswertet und im Falle eines Eingreifens die sicherheitsgerichtete Reaktion auslöst, während die jeweils andere Steuerungseinheit die empfangenen Daten ignorieren kann.

Die erfindungsgemäße mobile Maschine, bei der es sich insbesondere um einen mobilen Roboter handeln kann, umfasst eine fahrbare Basis, eine Fahrsteuerungseinheit zur Steuerung der fahrbaren Basis, einen an der fahrbaren Basis angeordneten beweglichen Maschinenteil, insbesondere Roboterarm, mit einem Gefährdungsabschnitt, eine Arbeitssteuerungseinheit zur Steuerung des beweglichen Maschinenteils sowie eine an dem beweglichen Maschinenteil angeordnete Sicherungsvorrichtung mit einem oder mehreren Sensoren, insbesondere einem oder mehreren berührungslosen Distanzsensoren. Die mobile Maschine ist wahlweise in einem Arbeitsmodus betreibbar, in dem der bewegliche Maschinenteil von der Arbeitssteuerungseinheit dazu angesteuert wird, Arbeitsbewegungen auszuführen, während die fahrbare Basis stillsteht, oder in einem Fahrmodus betreibbar, in dem die fahrbare Basis von der Fahrsteuerungseinheit dazu angesteuert wird, Fahrbewegungen auszuführen, während der bewegliche Maschinenteil eine definierte Fahrstellung einnimmt. Erfindungsgemäß ist dabei die Sicherungsvorrichtung (sowohl im Arbeitsmodus als auch im Fahrmodus dieselbe Sicherungsvorrichtung) dazu ausgebildet, ein jeweiliges Schutzvolumen im Hinblick auf ein Eingreifen in das Schutzvolumen zu überwachen, wobei das Schutzvolumen im Arbeitsmodus einer definierten Umgebung des Gefährdungsabschnitts entspricht und im Fahrmodus einer definierten Umgebung der fahrbaren Basis entspricht. Die Arbeitssteuerungseinheit ist dazu ausgebildet, im Arbeitsmodus im Falle eines Eingreifens eines Objekts in das jeweilige Schutzvolumen als sicherheitsgerichtete Reaktion zumindest die (aktuell ausgeführte) Arbeitsbewegung anzupassen, während die Fahrsteuerungseinheit dazu ausgebildet ist, im Fahrmodus im Falle eines Eingreifens eines Objekts in das jeweilige Schutzvolumen als sicherheitsgerichtete Reaktion zumindest die (aktuell ausgeführte) Fahrbewegung anzupassen.

Die mobile Maschine ist insgesamt dazu ausgebildet, gemäß dem erfindungsgemäßen Verfahren zum sicheren Betrieb einer mobilen Maschine betrieben zu werden. Die mobile Maschine kann insbesondere gemäß einer der vorstehend beschriebenen Ausführungsformen des erfindungsgemäßen Verfahrens betrieben werden. Die für diese Verfahren beschriebenen Merkmale und Vorteile gelten in entsprechender Weise auch für die gemäß der jeweiligen Ausführungsform betriebene mobile Maschine.

Gemäß einer vorteilhaften Ausführungsform weist die fahrbare Basis der mobilen Maschine keine Sensoren zur Überwachung der genannten Umgebung der fahrbaren Basis auf. Insbesondere sind an der fahrbaren Basis keine derartigen Sensoren angeordnet. Solche Sensoren sind nicht erforderlich, da das Überwachen der Umgebung der fahrbaren Basis im Fahrmodus ausschließlich mittels der an dem beweglichen Maschinenteil vorgesehenen Sicherungsvorrichtung erfolgt. Auf diese Weise brauchen für den sicheren Betrieb der mobilen Maschine im Fahrmodus zusätzlich zu der Sicherungsvorrichtung keine weiteren Sicherungsvorrichtungen vorgesehen zu werden.

Die Erfindung wird im Folgenden lediglich beispielhaft anhand der Figuren weiter erläutert.
- Fig. 1: zeigt eine Ausführungsform einer erfindungsgemäßen mobilen Maschine in stark vereinfachter schematischer Darstellung in einer Ansicht von oben, wobei die mobile Maschine im Arbeitsmodus betrieben wird.
- Fig. 2: zeigt dieselbe Ausführungsform wie die Fig. 1 in einer entsprechenden Darstellung, wobei die mobile Maschine im Fahrmodus betrieben wird.
- Fig. 3: zeigt dieselbe Ausführungsform wie die Fig. 1 und 2 in einer geringfügig detaillierteren vereinfachten schematischen Darstellung in einer Ansicht von der Seite, wobei die mobile Maschine wie in Fig. 2 im Fahrmodus betrieben wird.

In den Figuren ist eine Ausführungsform einer erfindungsgemäßen mobilen Maschine 11 dargestellt, die dazu ausgebildet ist, gemäß zumindest einer Ausführungsform des erfindungsgemäßen Verfahrens betrieben zu werden. Die mobile Maschine 11 ist als ein mobiler Manipulator ausgebildet und umfasst eine fahrbare Basis 13 sowie einen beweglichen Maschinenteil 15.

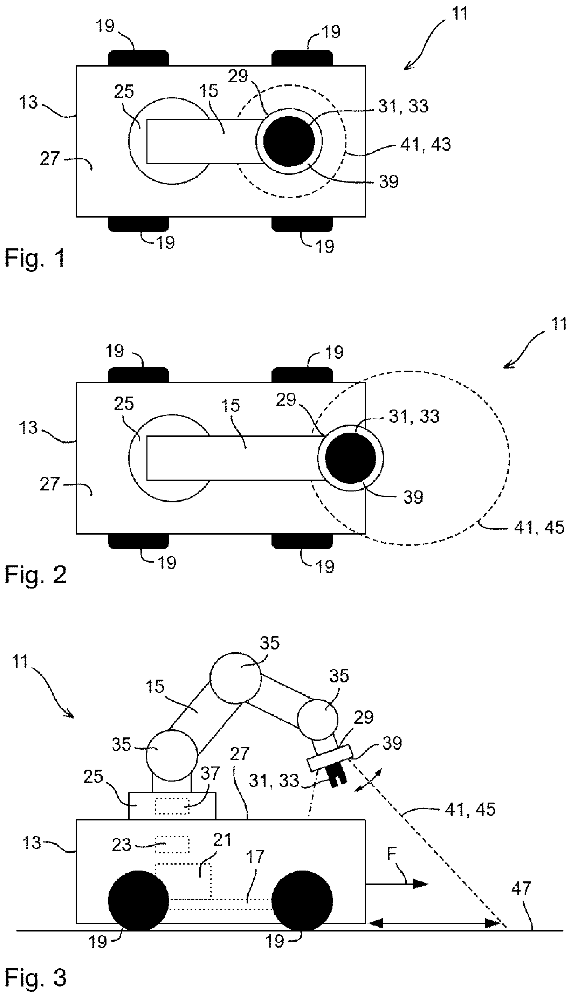

Die fahrbare Basis 13 umfasst ein Fahrgestell 17 mit Rädern 19, einen Antrieb 21 zum Antreiben der Räder 19 sowie eine Fahrsteuerungseinheit 23 (diese Elemente zum Teil nur in Fig. 3 gezeigt). Die Fahrsteuerungseinheit 23 ist dazu ausgebildet, die fahrbare Basis 13 zu steuern. Das umfasst, dass die Fahrsteuerungseinheit 23 die fahrbare Basis 13 dazu ansteuern kann, Fahrbewegungen auszuführen, insbesondere indem sie den Antrieb 21 sowie gegebenenfalls eine nicht gezeigte Lenkung der Räder 19 steuert.

Der bewegliche Maschinenteil 15 ist an der fahrbaren Basis 13 angeordnet und als Roboterarm ausgebildet. Ein erstes (bezüglich der fahrbaren Basis 13 proximales) Ende 25 des beweglichen Maschinenteils 15 ist an einer Oberseite der fahrbaren Basis 13, die Teil einer Oberfläche 27 der fahrbaren Basis 13 ist und als Arbeitsfläche fungiert, fest mit der fahrbaren Basis 13 verbunden. An einem dazu entgegengesetzten zweiten (bezüglich der fahrbaren Basis 13 distalen) Ende 29 des beweglichen Maschinenteils 15 ist ein Endeffektor 31 zur Bearbeitung eines jeweiligen Werkstücks (nicht gezeigt) vorgesehen. Aufgrund seiner Struktur und/oder seiner Funktion geht von dem Endeffektor 31 grundsätzlich eine Gefährdung für mit der mobilen Maschine 11 interagierende/kollaborierende Personen aus. Der Endeffektor 31 stellt daher einen Gefährdungsabschnitt 33 des beweglichen Maschinenteils 15 dar.

Der bewegliche Maschinenteil 15 umfasst Gelenke 35 und Antriebe (nicht gezeigt) sowie eine Arbeitssteuerungseinheit 37 (vgl. Fig. 3), die dazu ausgebildet ist, den beweglichen Maschinenteil 15 zu steuern. Das umfasst, dass die Arbeitssteuerungseinheit 37 den beweglichen Maschinenteil 15 dazu ansteuern kann, Arbeitsbewegungen auszuführen, insbesondere indem sie die genannten Antriebe sowie den Endeffektor 31 steuert. Als Arbeitsbewegungen kann der bewegliche Maschinenteil 15 beispielsweise ein Werkstück greifen, es auf der genannten Arbeitsfläche an der Oberseite der fahrbaren Basis 13 ablegen und/oder dort bearbeiten.

Die mobile Maschine 11 umfasst ferner eine Sicherungsvorrichtung 39, die mehrere Sensoren (nicht gezeigt) umfasst, die ringförmig um den Endeffektor 31 angeordnet sind. Die Sensoren sind als berührungslose Distanzsensoren ausgebildet, die dazu ausgebildet sind, in einer jeweiligen Erfassungsrichtung nach dem Time-of-Flight-Prinzip den Abstand eines Objekts von dem jeweiligen Sensor zu erfassen. Die Sensoren der Sicherungsvorrichtung 39 sind derart angeordnet, dass ihre Erfassungsbereiche insgesamt ein jeweiliges Schutzvolumen 41 zumindest im Wesentlichen umschließen. Dadurch kann mittels der Sicherungsvorrichtung 39 das jeweilige Schutzvolumen 41 im Hinblick darauf überwacht werden, ob ein Objekt in das jeweilige Schutzvolumen 41 eingreift. Die Grenzen des jeweiligen Schutzvolumens 41 sind in den Figuren durch unterbrochene Linien dargestellt.

Aufgrund der Anordnung der Sicherungsvorrichtung 39 am beweglichen Maschinenteil 15 hängt die Position und Ausrichtung des jeweiligen Schutzvolumens 41 von der jeweiligen Stellung des beweglichen Maschinenteils 15 ab. Darüber hinaus kann durch Festlegen von einem oder mehreren Schwellenwerten für die Sensoren, bis zu denen ein erfasster Abstand eines Objekts als Eingriff in das Schutzvolumen 41 zu werten ist, die Erstreckung des Schutzvolumens 41 in von der Sicherungsvorrichtung 39 weg weisender Richtung eingestellt werden.

Die mobile Maschine 11 kann wahlweise in einem Arbeitsmodus oder in einem Fahrmodus betrieben werden. Im Arbeitsmodus wird der bewegliche Maschinenteil 15 von der Arbeitssteuerungseinheit 37 dazu angesteuert, Arbeitsbewegungen auszuführen, während die fahrbare Basis 13 stillsteht. Dagegen wird im Fahrmodus die fahrbare Basis 13 dazu angesteuert, Fahrbewegungen auszuführen, während der bewegliche Maschinenteil 15 eine definierte Fahrstellung einnimmt. Die Fahrstellung kann dabei von der jeweiligen Fahrbewegung abhängig sein. Bei einer Änderung der Geschwindigkeit oder der Richtung der Fahrbewegung kann der bewegliche Maschinenteil 15 seine Fahrstellung also ändern. Ansonsten bewegt sich der bewegliche Maschinenteil 15 im Fahrmodus jedoch nicht.

In Fig. 1 ist ein Beispiel für einen Zustand der mobilen Maschine 11 gezeigt, den sie im Arbeitsmodus einnehmen kann. Der bewegliche Maschinenteil 15 führt dabei (angesteuert durch die Arbeitssteuerungseinheit 37) Arbeitsbewegungen aus, die auch den Endeffektor 31 bewegen. Im gezeigten Zustand ist der Endeffektor 31 zur als Arbeitsfläche fungierenden Oberseite der Oberfläche 27 der fahrbaren Basis 13 ausgerichtet, etwa um ein Werkstück zu bearbeiten. Die Sensoren der Sicherungsvorrichtung 39 sind dadurch in entsprechender Weise zur Oberseite hin ausgerichtet und überwachen eine Umgebung 43 des einen Gefährdungsabschnitt 33 darstellenden Endeffektors 31. Das Schutzvolumen 41 entspricht in diesem Zustand also dieser Umgebung 43 des Gefährdungsabschnitts 33. Die Schwellenwerte der Sensoren sind dabei derart eingestellt, dass sich das Schutzvolumen 41 nicht wesentlich über den Endeffektor 31 hinaus erstreckt. Die fahrbare Basis 13 steht im Arbeitsmodus still.

In den Fig. 2 und 3 ist dagegen ein Beispiel für einen Zustand der mobilen Maschine 11 gezeigt, den sie im Fahrmodus einnehmen kann. Die bewegliche Basis 13 führt dabei (angesteuert durch die Fahrsteuerungseinheit 23) Fahrbewegungen aus, während der bewegliche Maschinenteil 15 die gezeigte Fahrstellung einnimmt, in der die Sicherungsvorrichtung 39 derart ausgerichtet ist, dass zumindest einige ihrer Sensoren eine Umgebung 45 der fahrbaren Basis 13 überwachen, die sich in Richtung der aktuell ausgeführten Fahrbewegung F (vgl. Pfeil in Fig. 3) über die fahrbare Basis 13 hinaus erstreckt. Das Schutzvolumen 41 entspricht in diesem Zustand also dieser Umgebung 45 der fahrbaren Basis 13. Die Schwellenwerte der Sensoren sind dabei derart eingestellt, dass sich das Schutzvolumen 41 bis zu einem Boden 47 erstreckt, auf dem die mobile Maschine 11 fährt. Allerdings können diejenigen Sensoren der Sicherungsvorrichtung 39, deren Erfassungsrichtung die Oberfläche 27 der fahrbaren Basis 13 kreuzt, auch einfach deaktiviert sein. Der entsprechende Rand des Schutzvolumens 41 ist in Fig. 3 daher anders als der entgegengesetzte, sich bis zum Boden 47 erstreckende Rand des Schutzvolumens 41 strichpunktiert dargestellt.

Falls mittels der Sicherungsvorrichtung 39 anhand von Daten, die mittels der Sensoren der Sicherungsvorrichtung 39 erfasst wurden, ein Eingreifen eines Objekts in das jeweilige Schutzvolumen 41 (im Arbeitsmodus in die Umgebung 43 des Gefährdungsabschnitts 33 bzw. im Fahrmodus in die Umgebung 45 der fahrbaren Basis 13) festgestellt wird, wird zur Vermeidung einer Gefährdung von Objekten (insbesondere Personen) im Umfeld der mobilen Maschine 11 jeweils eine sicherheitsgerichtete Reaktion ausgelöst, die im Arbeitsmodus umfasst, dass die aktuell ausgeführte Arbeitsbewegung angepasst wird, und im Fahrmodus umfasst, dass die aktuell ausgeführte Fahrbewegung angepasst wird. Insbesondere wird die Arbeitsbewegung bzw. die Fahrbewegung dabei modifiziert. Beispielsweise können der bewegliche Maschinenteil 15 bzw. die fahrbare Basis 13 dazu angesteuert werden, dem jeweiligen Objekt auszuweichen, abgebremst werden oder auch vollständig angehalten werden.

Wie bereits erwähnt, kann die Fahrstellung, die der bewegliche Maschinenteil 15 im Fahrmodus einnimmt, von der aktuell ausgeführten Fahrbewegung F der fahrbaren Basis 13 abhängig sein. Mit anderen Worten kann vorgesehen sein, dass der bewegliche Maschinenteil 15 bei einer ersten Fahrbewegung der fahrbaren Basis 13 eine erste definierte Fahrstellung einnimmt und bei einer von der ersten Fahrbewegung verschiedenen zweiten Fahrbewegung der fahrbaren Basis 13 eine von der ersten definierten Fahrstellung verschiedene zweite definierte Fahrstellung einnimmt. Die erste und die zweite Fahrbewegung können sich etwa hinsichtlich ihrer jeweiligen Geschwindigkeit und/oder Richtung unterscheiden. Die erste und die zweite Fahrstellung können sich zum Beispiel (zumindest unter anderem) hinsichtlich einer Winkelausrichtung des Endeffektors 31 bzw. der Sicherungsvorrichtung 39 unterscheiden.

Beispielsweise kann vorgesehen sein, dass im Falle einer Änderung der Geschwindigkeit der Fahrbewegung F der bewegliche Maschinenteil 15 derart aus seiner jeweiligen Fahrstellung in eine andere Fahrstellung verstellt wird, dass die Sicherungsvorrichtung 39 (zumindest unter anderem) um eine horizontale Achse verkippt wird (vgl. den gebogenen Doppelpfeil in Fig. 3). Durch das Verkippen verändert sich dann, wie weit sich die mittels der Sensoren der Sicherungsvorrichtung 39 überwachte Umgebung 45 der fahrbaren Basis 13 in Richtung der Fahrbewegung F über die fahrbare Basis 13 hinaus erstreckt (vgl. horizontalen Doppelpfeil in Fig. 3). Dabei ist es zweckmäßig, wenn sich die überwachte Umgebung 45 bei einer größeren Geschwindigkeit der Fahrbewegung F weiter erstreckt als bei einer geringeren Geschwindigkeit, damit Objekte in Fahrtrichtung vor der fahrbaren Basis 13 jeweils rechtzeitig detektiert werden können.

Ferner kann es zweckmäßig sein, im Falle einer Änderung der Richtung der Fahrbewegung F den beweglichen Maschinenteil derart aus seiner jeweiligen Fahrstellung in eine andere Fahrstellung zu verstellen, dass die Sicherungsvorrichtung 39 (beispielsweise durch eine Drehung des beweglichen Maschinenteils 15 um eine vertikale Achse um einen der Richtungsänderung entsprechenden Winkel) so ausgerichtet wird, dass sich die überwachte Umgebung 45 der fahrbaren Basis 13 in die neue Fahrtrichtung über die fahrbare Basis 13 hinaus erstreckt. Auf diese Weise kann beispielsweise während einer Vorwärtsfahrt der mobilen Maschine 11 eine Umgebung 45 vor der mobilen Maschine 11 überwacht werden und während einer Rückwärtsfahrt der mobilen Maschine 11 eine Umgebung 45 hinter der mobilen Maschine 11 überwacht werden.

Die mobile Maschine 11 ist dadurch flexibel einsetzbar und dabei sicher betreibbar, kommt aber zugleich mit vergleichsweise wenigen Komponenten aus, da dieselbe Sicherungsvorrichtung 39 einerseits im Arbeitsmodus dazu genutzt wird, eine Umgebung 43 des Gefährdungsabschnitts 33 zu überwachen und im Falle eines Eingreifens in die Umgebung 43 eine entsprechende sicherheitsgerichtete Reaktion auszulösen, und andererseits im Fahrmodus dazu genutzt wird, eine Umgebung 45 der fahrbaren Basis 13 zu überwachen und im Falle eines Eingreifens in die Umgebung 45 eine entsprechende sicherheitsgerichtete Reaktion auszulösen. Die mobile Maschine 11 kann dadurch vergleichsweise kostengünstig hergestellt werden, vergleichsweise leicht sein und zugleich eine vergleichsweise hohe funktionale Sicherheit aufweisen.

### Bezugszeichen

- 11: mobile Maschine
- 13: fahrbare Basis
- 15: bewegliche Maschinenteil
- 17: Fahrgestell
- 19: Rad
- 21: Antrieb
- 23: Fahrsteuerungseinheit
- 25: erstes Ende des beweglichen Maschinenteils
- 27: Oberfläche der fahrbaren Basis
- 29: zweites (freies) Ende des beweglichen Maschinenteils
- 31: Endeffektor
- 33: Gefährdungsabschnitt
- 35: Gelenk
- 37: Arbeitssteuerungseinheit
- 39: Sicherungsvorrichtung
- 41: Schutzvolumen
- 43: Umgebung des Gefährdungsabschnitts
- 45: Umgebung der fahrbaren Basis
- 47: Boden
- F: Fahrbewegung

## Patentansprüche

1. Verfahren zum sicheren Betrieb einer mobilen Maschine (11), insbesondere im Rahmen einer Mensch-Roboter-Interaktion,
wobei die mobile Maschine (11) eine fahrbare Basis (13), einen an der fahrbaren Basis (13) angeordneten beweglichen Maschinenteil (15) mit einem Gefährdungsabschnitt (33) sowie eine Sicherungsvorrichtung (39) mit einem oder mehreren Sensoren umfasst,
wobei das Verfahren umfasst:
dass die mobile Maschine (11) wahlweise in einem Arbeitsmodus oder in einem Fahrmodus betrieben wird;
dass in dem Arbeitsmodus:
- die fahrbare Basis (13) stillsteht,
- der bewegliche Maschinenteil (15) Arbeitsbewegungen ausführt, und
- die Sicherungsvorrichtung (39) dabei derart mitbewegt wird, dass sie mittels des einen oder der mehreren Sensoren ein Schutzvolumen (41) überwacht, das einer definierten Umgebung (43) des Gefährdungsabschnitts (33) entspricht,
wobei im Falle eines Eingreifens eines Objekts in das Schutzvolumen (41) eine sicherheitsgerichtete Reaktion ausgelöst wird, die eine Anpassung der Arbeitsbewegung umfasst; und
dass in dem Fahrmodus:
- die fahrbare Basis (13) Fahrbewegungen ausführt,
- der bewegliche Maschinenteil (15) eine definierte Fahrstellung einnimmt, und
- die Sicherungsvorrichtung (39) dabei derart ausgerichtet ist, dass sie mittels des einen oder der mehreren Sensoren ein Schutzvolumen (41) überwacht, das einer definierten Umgebung (45) der fahrbaren Basis (13) entspricht,
wobei im Falle eines Eingreifens eines Objekts in das Schutzvolumen (41) eine sicherheitsgerichtete Reaktion ausgelöst wird, die eine Anpassung der Fahrbewegung umfasst,
**dadurch gekennzeichnet,**
**dass** die Sicherungsvorrichtung (39) an dem beweglichen Maschinenteil (15) angeordnet ist
und die mobile Maschine (11) im Fahrmodus die genannte Umgebung (45) der fahrbaren Basis (13) ausschließlich mittels der an dem beweglichen Maschinenteil (15) angeordneten Sicherungsvorrichtung (39) überwacht.

2. Verfahren nach Anspruch 1,
wobei die mobile Maschine (11) ein mobiler Roboter ist und der bewegliche Maschinenteil (15) ein Roboterarm ist.

3. Verfahren nach Anspruch 1 oder 2,
wobei der Gefährdungsabschnitt (33) an einem freien Ende (29) des beweglichen Maschinenteils (15) angeordnet ist.

4. Verfahren nach einem der vorstehenden Ansprüche,
wobei sich die genannte Umgebung (43) des Gefährdungsabschnitts (33) in zumindest einer Raumebene derart um den Gefährdungsabschnitt (33) herum erstreckt, dass der Gefährdungsabschnitt (33) zumindest in zu der Raumebene parallelen Richtungen nur durch diese Umgebung (43) hindurch von außen zugänglich ist.

5. Verfahren nach einem der vorstehenden Ansprüche,
wobei es sich bei den Sensoren der Sicherungsvorrichtung (39) um berührungslose Distanzsensoren handelt, die dazu ausgebildet sind, in einer jeweiligen Erfassungsrichtung den Abstand eines jeweiligen Objekts von dem jeweiligen Sensor zu erfassen.

6. Verfahren nach Anspruch 5,
wobei die Erstreckung des Schutzvolumens (41) entlang einer jeweiligen Erfassungsrichtung durch einen jeweiligen Schwellenwert definiert wird, und wobei für zumindest einige der Sensoren der jeweilige Schwellenwert im Fahrmodus anders, insbesondere größer, ist als im Arbeitsmodus.

7. Verfahren nach Anspruch 5 oder 6,
wobei die fahrbare Basis (13) eine Oberfläche (27) aufweist, und wobei im Fahrmodus diejenigen Sensoren, deren Erfassungsrichtung die Oberfläche (27) der fahrbaren Basis (13) kreuzt, deaktiviert werden.

8. Verfahren nach einem der vorstehenden Ansprüche,
wobei sich die genannte Umgebung (45) der fahrbaren Basis (13) zumindest in Richtung der jeweiligen Fahrbewegung (F) über die fahrbare Basis hinaus erstreckt.

9. Verfahren nach einem der vorstehenden Ansprüche,
wobei die Fahrstellung, die der bewegliche Maschinenteil (15) im Fahrmodus einnimmt, von der Geschwindigkeit und/oder von der Richtung der jeweiligen Fahrbewegung (F) abhängig ist.

10. Verfahren nach einem der vorstehenden Ansprüche,
wobei der bewegliche Maschinenteil (15) im Fahrmodus bei einer Fahrbewegung der fahrbaren Basis (13) in eine erste Richtung eine erste Fahrstellung einnimmt, in der die Sicherungsvorrichtung (39) derart ausgerichtet ist, dass das überwachte Schutzvolumen (41) einer ersten Umgebung der fahrbaren Basis (13) entspricht, die sich in die erste Richtung über die fahrbare Basis (13) hinaus erstreckt, und bei einer Fahrbewegung der fahrbaren Basis (13) in eine von der ersten Richtung verschiedene zweite Richtung eine zweite Fahrstellung einnimmt, in der die Sicherungsvorrichtung (39) derart ausgerichtet ist, dass das überwachte Schutzvolumen (41) einer zweiten Umgebung der fahrbaren Basis (13) entspricht, die sich in die zweite Richtung über die fahrbare Basis (13) hinaus erstreckt.

11. Verfahren nach einem der vorstehenden Ansprüche,
wobei der bewegliche Maschinenteil (15) im Fahrmodus bei einer Fahrbewegung der fahrbaren Basis (13) mit einer ersten Geschwindigkeit eine erste Fahrstellung einnimmt, in der die Sicherungsvorrichtung (39) derart ausgerichtet ist, dass das überwachte Schutzvolumen (41) einer ersten Umgebung der fahrbaren Basis (13) entspricht, die sich in Richtung der Fahrbewegung über die fahrbare Basis (13) hinaus erstreckt, und bei einer Fahrbewegung der fahrbaren Basis (13) mit einer zweiten Geschwindigkeit, die größer als die erste Geschwindigkeit ist, eine zweite Fahrstellung einnimmt, in der die Sicherungsvorrichtung (39) derart ausgerichtet ist, dass das überwachte Schutzvolumen (41) einer zweiten Umgebung der fahrbaren Basis (13) entspricht, die sich weiter als die erste Umgebung in Richtung der Fahrbewegung über die fahrbare Basis (13) hinaus erstreckt.

12. Verfahren nach einem der vorstehenden Ansprüche,
wobei die mobile Maschine (11) eine Fahrsteuerungseinheit (23) zur Steuerung der fahrbaren Basis (13) sowie eine Arbeitssteuerungseinheit (37) zur Steuerung des beweglichen Maschinenteils (15) umfasst,
wobei die Sicherungsvorrichtung (39) von den Sensoren erfasste Daten im Hinblick auf ein Eingreifen in das jeweilige Schutzvolumen (41) auswertet und im Falle eines Eingreifens ein entsprechendes Signal an die jeweilige Steuerungseinheit (23 bzw. 37) ausgibt, die, wenn sie das entsprechende Signal empfängt, die jeweilige sicherheitsgerichtete Reaktion auslöst.

13. Verfahren nach einem der Ansprüche 1 bis 11,
wobei die mobile Maschine (11) eine Fahrsteuerungseinheit (23) zur Steuerung der fahrbaren Basis (13) sowie eine Arbeitssteuerungseinheit (37) zur Steuerung des beweglichen Maschinenteils (15) umfasst,
wobei die Sicherungsvorrichtung (39) von den Sensoren erfasste Daten an die Arbeitssteuerungseinheit (37) und/oder an die Fahrsteuerungseinheit (23) ausgibt, und
wobei die Fahrsteuerungseinheit (23) und/oder die Arbeitssteuerungseinheit (37) die von der Sicherungsvorrichtung (39) empfangenen Daten im Hinblick auf ein Eingreifen in das jeweilige Schutzvolumen (41) auswertet/auswerten und im Falle eines Eingreifens die jeweilige sicherheitsgerichtete Reaktion auslöst/auslösen.

14. Mobile Maschine (11), insbesondere mobiler Roboter, die eine fahrbare Basis (13), eine Fahrsteuerungseinheit (23) zur Steuerung der fahrbaren Basis (13), einen an der fahrbaren Basis (13) angeordneten beweglichen Maschinenteil (15), insbesondere Roboterarm, mit einem Gefährdungsabschnitt (33), eine Arbeitssteuerungseinheit (37) zur Steuerung des beweglichen Maschinenteils (15) sowie eine an dem beweglichen Maschinenteil (15) angeordnete Sicherungsvorrichtung (39) mit einem oder mehreren Sensoren, insbesondere einem oder mehreren berührungslosen Distanzsensoren, umfasst,
wobei die mobile Maschine (11) wahlweise in einem Arbeitsmodus betreibbar ist, in dem der bewegliche Maschinenteil (15) von der Arbeitssteuerungseinheit (37) dazu angesteuert wird, Arbeitsbewegungen auszuführen, während die fahrbare Basis (13) stillsteht, oder in einem Fahrmodus betreibbar ist, in dem die fahrbare Basis (13) von der Fahrsteuerungseinheit (23) dazu angesteuert wird, Fahrbewegungen auszuführen, während der bewegliche Maschinenteil (15) eine definierte Fahrstellung einnimmt,
wobei die Sicherungsvorrichtung (39) dazu ausgebildet ist, ein jeweiliges Schutzvolumen (41) im Hinblick auf ein Eingreifen in das Schutzvolumen (41) zu überwachen,
wobei das Schutzvolumen (41) im Arbeitsmodus einer definierten Umgebung (43) des Gefährdungsabschnitts (33) entspricht und im Fahrmodus einer definierten Umgebung (45) der fahrbaren Basis (13) entspricht,
wobei die Arbeitssteuerungseinheit (37) dazu ausgebildet ist, im Arbeitsmodus im Falle eines Eingreifens eines Objekts in das jeweilige Schutzvolumen (41) als sicherheitsgerichtete Reaktion zumindest die Arbeitsbewegung anzupassen,
wobei die Fahrsteuerungseinheit (23) dazu ausgebildet ist, im Fahrmodus im Falle eines Eingreifens eines Objekts in das jeweilige Schutzvolumen (41) als sicherheitsgerichtete Reaktion zumindest die Fahrbewegung anzupassen, und
wobei die mobile Maschine (11) dazu ausgebildet ist, gemäß einem der vorstehenden Verfahren betrieben zu werden.

## Claims

1. A method for the safe operation of a mobile machine (11), in particular as part of a human-robot interaction,
wherein the mobile machine (11) comprises a travelable base (13); a movable machine part (15) arranged at the travelable base (13) and comprising a hazardous section (33); and a securing apparatus (39) comprising one or more sensors,
wherein the method comprises:
that the mobile machine (11) is selectively operated in a work mode or in a travel mode;
that in the work mode:
- the travelable base (13) is stationary,
- the movable machine part (15) performs working movements, and
- the securing apparatus (39) is in this respect moved along such that it monitors a protective volume (41), which corresponds to a defined environment (43) of the hazardous section (33), by means of the one or more sensors,
wherein, in the event of an object engaging into the protective volume (41), a safety-related reaction is triggered that comprises adapting the working movement; and
that in the travel mode:
- the travelable base (13) performs travel movements,
- the movable machine part (15) assumes a defined travel position, and
- the securing apparatus (39) is in this respect oriented such that it monitors a protective volume (41), which corresponds to a defined environment (45) of the travelable base (13), by means of the one or more sensors,
wherein, in the event of an object engaging into the protective volume (41), a safety-related reaction is triggered that comprises adapting the travel movement,
**characterized in that**
the securing apparatus (39) is arranged at the movable machine part (15) and the mobile machine (11) monitors said environment (45) of the travelable base (13) in the travel mode solely by means of the securing apparatus (39) arranged at the movable machine part (15).

2. A method according to claim 1,
wherein the mobile machine (11) is a mobile robot and the movable machine part (15) is a robot arm.

3. A method according to claim 1 or 2,
wherein the hazardous section (33) is arranged at a free end (29) of the movable machine part (15).

4. A method according to any one of the preceding claims,
wherein said environment (43) of the hazardous section (33) extends around the hazardous section (33) in at least one spatial plane such that the hazardous section (33) is accessible from the outside only through this environment (43) at least in directions in parallel with the spatial plane.

5. A method according to any one of the preceding claims,
wherein the sensors of the securing apparatus (39) are non-contact distance sensors which are configured to detect the distance of a respective object from the respective sensor in a respective detection direction.

6. A method according to claim 5,
wherein the extent of the protective volume (41) along a respective detection direction is defined by a respective threshold value, and wherein, for at least some of the sensors, the respective threshold value is different, in particular greater, in the travel mode than in the work mode.

7. A method according to claim 5 or 6,
wherein the travelable base (13) has a surface (27), and
wherein, in the travel mode, those sensors whose detection direction crosses the surface (27) of the travelable base (13) are deactivated.

8. A method according to any one of the preceding claims,
wherein said environment (45) of the travelable base (13) extends beyond the travelable base at least in the direction of the respective travel movement (F).

9. A method according to any one of the preceding claims,
wherein the travel position which the movable machine part (15) assumes in the travel mode is dependent on the speed and/or on the direction of the respective travel movement (F).

10. A method according to any one of the preceding claims,
wherein, in the travel mode, during a travel movement of the travelable base (13) in a first direction, the movable machine part (15) assumes a first travel position, in which the securing apparatus (39) is oriented such that the monitored protective volume (41) corresponds to a first environment of the travelable base (13) that extends beyond the travelable base (13) in the first direction and, during a travel movement of the travelable base (13) in a second direction different from the first direction, said movable machine part (15) assumes a second travel position in which the securing apparatus (39) is oriented such that the monitored protective volume (41) corresponds to a second environment of the travelable base (13) that extends beyond the travelable base (13) in the second direction.

11. A method according to any one of the preceding claims,
wherein, in the travel mode, during a travel movement of the travelable base (13) at a first speed, the movable machine part (15) assumes a first travel position, in which the securing apparatus (39) is oriented such that the monitored protective volume (41) corresponds to a first environment of the travelable base (13) that extends beyond the travelable base (13) in the direction of the travel movement, and, during a travel movement of the travelable base (13) at a second speed which is greater than the first speed, said movable machine part (15) assumes a second travel position in which the securing apparatus (39) is oriented such that the monitored protective volume (41) corresponds to a second environment of the travelable base (13) that extends further beyond the travelable base (13) in the direction of the travel movement than the first environment.

12. A method according to any one of the preceding claims,
wherein the mobile machine (11) comprises a travel control unit (23) for controlling the travelable base (13) and a work control unit (37) for controlling the movable machine part (15),
wherein the securing apparatus (39) evaluates data acquired by the sensors with respect to an engagement into the respective protective volume (41) and, in the event of an engagement, outputs a corresponding signal to the respective control unit (23 or 37) which, when it receives the corresponding signal, triggers the respective safety-related reaction.

13. A method according to any one of the claims 1 to 11,
wherein the mobile machine (11) comprises a travel control unit (23) for controlling the travelable base (13) and a work control unit (37) for controlling the movable machine part (15),
wherein the securing apparatus (39) outputs data acquired by the sensors to the work control unit (37) and/or to the travel control unit (23), and wherein the travel control unit (23) and/or the work control unit (37) evaluates/evaluate the data received from the securing apparatus (39) with respect to an engagement into the respective protective volume (41) and, in the event of an engagement, triggers/trigger the respective safety-related reaction.

14. A mobile machine (11), in particular a mobile robot, which comprises a travelable base (13); a travel control unit (23) for controlling the travelable base (13); a movable machine part (15), in particular a robot arm, arranged at the travelable base (13) and comprising a hazardous section (33); a work control unit (37) for controlling the movable machine part (15); and a securing apparatus (39) arranged at the movable machine part (15) and comprising one or more sensors, in particular one or more non-contact distance sensors,
wherein the mobile machine (11) is selectively operable in a work mode, in which the movable machine part (15) is controlled by the work control unit (37) to perform working movements while the travelable base (13) is stationary, or is operable in a travel mode in which the travelable base (13) is controlled by the travel control unit (23) to perform travel movements while the movable machine part (15) assumes a defined travel position, wherein the securing apparatus (39) is configured to monitor a respective protective volume (41) with respect to an engagement into the protective volume (41),
wherein the protective volume (41) corresponds to a defined environment (43) of the hazardous section (33) in the work mode and corresponds to a defined environment (45) of the travelable base (13) in the travel mode, wherein the work control unit (37) is configured, in the work mode, in the event of an object engaging into the respective protective volume (41), to at least adapt the working movement as a safety-related reaction,
wherein the travel control unit (23) is configured, in the travel mode, in the event of an object engaging into the respective protective volume (41), to at least adapt the travel movement as a safety-related reaction, and
wherein the mobile machine (11) is configured to be operated in accordance with any one of the above methods.

## Revendications

1. Procédé de fonctionnement sécurisé d'une machine mobile (11), en particulier dans le cadre d'une interaction homme-robot,
la machine mobile (11) comprenant une base roulante (13), une partie de machine (15) mobile montée sur la base roulante (13) et présentant une zone de danger (33), ainsi qu'un dispositif de sécurité (39) muni d'un ou plusieurs capteurs,
le procédé consistant à :
faire fonctionner la machine mobile (11) sélectivement en mode de travail ou en mode de translation ;
sachant que, en mode de travail :
- la base roulante (13) est à l'arrêt,
- la partie de machine mobile (15) effectue des mouvements de travail, et
- le dispositif de sécurité (39) est déplacé avec cette dernière de manière à surveiller, au moyen dudit ou desdits capteurs, un volume de protection (41) qui correspond à un environnement défini (43) de la zone de danger (33), en cas de pénétration d'un objet dans le volume de protection (41), une réaction de sécurité est déclenchée, incluant un ajustement du mouvement de travail ; et
qu'en mode de translation :
- la base roulante (13) effectue des mouvements de translation,
- la partie de machine mobile (15) adopte une position de translation définie, et
- le dispositif de sécurité (39) est orienté de manière à surveiller, au moyen dudit ou desdits capteurs, un volume de protection (41) qui correspond à un environnement défini (45) de la base roulante (13),
en cas de pénétration d'un objet dans le volume de protection (41), une réaction de sécurité est déclenchée, incluant un ajustement du mouvement de translation,
**caractérisé en ce que**
le dispositif de sécurité (39) est disposé sur la partie de machine mobile (15), et
en mode de translation, la machine mobile (11) surveille ledit environnement (45) de la base roulante (13) exclusivement au moyen du dispositif de sécurité (39) disposé sur la partie de machine mobile (15).

2. Procédé selon la revendication 1,
dans lequel la machine mobile (11) est un robot mobile et la partie de machine mobile (15) est un bras de robot.

3. Procédé selon la revendication 1 ou 2,
dans lequel la zone de danger (33) est disposée à une extrémité libre (29) de la partie de machine mobile (15).

4. Procédé selon l'une des revendications précédentes,
dans lequel ledit environnement (43) de la zone de danger (33) s'étend autour de la zone de danger (33) dans au moins un plan dans l'espace, de sorte que, au moins dans les directions parallèles à ce plan dans l'espace, la zone de danger (33) ne soit accessible de l'extérieur que par cet environnement (43).

5. Procédé selon l'une des revendications précédentes,
dans lequel les capteurs du dispositif de sécurité (39) sont des capteurs de distance sans contact conçus pour détecter la distance d'un objet respectif par rapport au capteur respectif dans une direction de détection respective.

6. Procédé selon la revendication 5,
dans lequel l'étendue du volume de protection (41) le long d'une direction de détection respective est définie par une valeur seuil respective, et pour au moins certains capteurs, la valeur seuil respective en mode de translation est différente de celle en mode de travail, en particulier plus élevée.

7. Procédé selon la revendication 5 ou 6,
dans lequel la base roulante (13) présente une surface (27), et en mode de translation, les capteurs dont la direction de détection intersecte la surface (27) de la base roulante (13) sont désactivés.

8. Procédé selon l'une des revendications précédentes,
dans lequel ledit environnement (45) de la base roulante (13) s'étend au-delà de la base roulante, au moins dans la direction du mouvement de translation respectif (F).

9. Procédé selon l'une des revendications précédentes,
dans lequel la position de translation adoptée par la partie de machine mobile (15) en mode de translation dépend de la vitesse et/ou de la direction du mouvement de translation respectif (F).

10. Procédé selon l'une des revendications précédentes,
dans lequel, en mode de translation, lors d'un mouvement de translation de la base roulante (13) dans une première direction, la partie de machine mobile (15) adopte une première position de translation dans laquelle le dispositif de sécurité (39) est orienté de telle sorte que le volume de protection surveillé (41) corresponde à un premier environnement de la base roulante (13) qui s'étend au-delà de la base roulante (13) dans la première direction, et, lors d'un mouvement de translation de la base roulante (13) dans une deuxième direction différente de la première direction, ladite partie de machine mobile adopte une deuxième position de translation dans laquelle le dispositif de sécurité (39) est alors orienté de telle sorte que le volume de protection surveillé (41) corresponde à un deuxième environnement de la base roulante (13) qui s'étend au-delà de la base roulante (13) dans la deuxième direction.

11. Procédé selon l'une des revendications précédentes,
dans lequel, en mode de translation, lors d'un mouvement de translation de la base roulante (13) à une première vitesse, la partie de machine mobile (15) adopte une première position de translation dans laquelle le dispositif de sécurité (39) est orienté de telle sorte que le volume de protection surveillé (41) corresponde à un premier environnement de la base roulante (13) qui s'étend au-delà de la base roulante (13) dans la direction du mouvement de translation, et, lors d'un mouvement de translation de la base roulante (13) à une deuxième vitesse supérieure à la première vitesse, ladite partie de machine mobile adopte une deuxième position de translation dans laquelle le dispositif de sécurité (39) est orienté de telle sorte que le volume de protection surveillé (41) corresponde à un deuxième environnement de la base roulante (13) qui s'étend plus loin au-delà de la base roulante (13) dans la direction du mouvement de translation que ne le fait le premier environnement.

12. Procédé selon l'une des revendications précédentes,
dans lequel la machine mobile (11) comprend une unité de commande de translation (23), destinée à commander la base roulante (13), et une unité de commande de travail (37), destinée à commander la partie de machine mobile (15),
le dispositif de sécurité (39) évalue les données, acquises par les capteurs, en ce qui concerne une éventuelle pénétration dans le volume de protection respectif (41) et, en cas de pénétration, transmet un signal correspondant à l'unité de commande respective (23 ou 37), laquelle, à la réception du signal correspondant, déclenche la réaction de sécurité respective.

13. Procédé selon l'une des revendications 1 à 11,
dans lequel la machine mobile (11) comprend une unité de commande de translation (23), destinée à commander la base roulante (13), et une unité de commande de travail (37), destinée à commander la partie de machine mobile (15),
le dispositif de sécurité (39) transmet les données acquises par les capteurs à l'unité de commande de travail (37) et/ou à l'unité de commande de translation (23), et
l'unité de commande de translation (23) et/ou l'unité de commande de travail (37) évalue(nt) les données, reçues du dispositif de sécurité (39), en ce qui concerne une éventuelle pénétration dans le volume de protection respectif (41) et, en cas de pénétration, déclenche(nt) la réaction de sécurité respective.

14. Machine mobile (11), en particulier un robot mobile, comprenant une base roulante (13), une unité de commande de translation (23) destinée à commander la base roulante (13), une partie de machine mobile (15), en particulier un bras de robot, montée sur la base roulante (13) et présentant une zone de danger (33), une unité de commande de travail (37) destinée à commander la partie de machine mobile (15), ainsi qu'un dispositif de sécurité (39) disposé sur la partie de machine mobile (15) et muni d'un ou plusieurs capteurs, en particulier d'un ou plusieurs capteurs de distance sans contact,
dans laquelle
la machine mobile (11) peut fonctionner sélectivement soit en mode de travail, où la partie de machine mobile (15) est commandée par l'unité de commande de travail (37) pour effectuer des mouvements de travail alors que la base roulante (13) est à l'arrêt, soit en mode de translation, où la base roulante (13) est commandée par l'unité de commande de translation (23) pour effectuer des mouvements de translation alors que la partie de machine mobile (15) adopte une position de translation définie,
le dispositif de sécurité (39) est conçu pour surveiller un volume de protection respectif (41) en ce qui concerne une pénétration dans le volume de protection (41),
le volume de protection (41) correspond, en mode de travail, à un environnement défini (43) de la zone de danger (33) et correspond, en mode de translation, à un environnement défini (45) de la base roulante (13),
en mode de travail, en cas de pénétration d'un objet dans le volume de protection respectif (41), l'unité de commande de travail (37) est conçue pour ajuster, en tant que réaction de sécurité, au moins le mouvement de travail,
en mode de translation, en cas de pénétration d'un objet dans le volume de protection respectif (41), l'unité de commande de translation (23) est conçue pour ajuster, en tant que réaction de sécurité, au moins le mouvement de translation, et
la machine mobile (11) est conçue pour fonctionner selon l'un des procédés précédents.
